# EUROPEAN PATENT APPLICATION

(11) **EP 1 014 670 A2**
(43) Date of publication of application: **28.06.2000**
(21) Application number: 99309848.2
(22) Date of filing: 07.12.1999
(51) Int. Cl.: H04M 11/06

(54) **Telecommunication system with a multi-channel digital subsciber line interface and method**

(30) Priority: 23.12.1998 US 220175
(71) Applicant: LUCENT TECHNOLOGIES INC., Murray Hill, New Jersey 07974-0636 (US)
(72) Inventor: Badiee, Behzad, Naperville, Illinois 60565 (US); Bond-Harris, James F., Naperville, Illinois 60563 (US); Lien, Brian S., Naperville, Illinois 60565 (US); Sentoff, Stephen H., West Chicago, Illinois 60185 (US)
(74) Representative: Watts, Christopher Malcolm Kelway, Dr.

(57) **Abstract**

A telecommunication system having a central office switch connected with a subscriber through an asymmetric digital subscriber line service via a single twisted pair loop with a ATM multi-channel voice interface for converting telephonic voice traffic from additional telephones of the subscriber to a stream of voice data in logical channel associated with the additional telephones and having associated individual telephone directory numbers. The voice data is inserted into high speed data segment of the asymmetric digital subscriber line service on a dynamic basis prior to transmission to the central office switch via the twisted pair from the subscriber and a central office ATM multi-channel voice interface.

## Description

### Background Of The Invention

The present invention relates generally to telecommunications and, more particularly, to a telephonic communications system with asymmetric digital subscriber line service.

Asymmetric digital subscriber line, or ADSL, service is known which uses existing copper pair wires that extend from a telephone company central office switch to the premises of a customer to transmit data between high speed ADSL modems. The data transmission system is asymmetric because the transmission from the central office to the subscriber is significantly faster than the transmission from the subscriber to the central office. The data is conveyed via a high speed, data segment of the asymmetric digital subscriber line service signal. The high speed data segment is used for internet access, remote LAN access, video-on-demand and cable TV.

A passband analog voice channel is also included in the asymmetric digital subscriber line service signal for plain old telephone service, or POTS, with a relatively low bandwidth on the order of 4kHz for only one telephone. This passband analog voice channel enables digital voice communications over the public switched telephone network, or PSTN, based on a pulse code modulated, or PCM, standard. The POTS passband analog voice channel is split off from the digital ADSL modem by filters to ensure the survival of POTS service in the event that the ADSL devices fail.

Disadvantageously, in known ADSL service there is only one passband analog voice channel, and the passband analog voice channel is capable of only handling a single POTS line for one telephone on the one twisted pair with a single telephone directory number.

The high speed, data transmission segment has a transmission capability many times faster than that of the passband analog voice channel used for POTS service.

### Summary Of The Invention

In accordance with the present invention, a telecommunication system and method are provided in which the limitations of the known ADSL systems are overcome by provision of a multi-channel voice interface to enable use of the high speed, data segment to create additional POTS lines with individual directory numbers in addition to the POTS line provided by the conventional passband analog voice channel.

In accordance with the invention, a telecommunication system having a central office switch connected with a subscriber telephone through an asymmetric digital subscriber line service via a single twisted pair loop is provided with a multi-channel digital subscriber line voice interface, having a POTS signal converter for converting POTS format signals from the subscriber telephone to a stream of voice data in a logical channel associated with the subscriber telephone, a data merger for inserting the stream of voice data in the logical channel into a high speed data segment of the asymmetric digital subscriber line service prior to transmission from the subscriber via the twisted pair to the central office switch, a high speed data splitter for removing the voice data in the logical channel from the high speed data segment of the asymmetric digital subscriber line service signal received at the central office switch, a POTS signal reconverter for reconverting the voice data of the removed logical channel to a reconverted POTS format signal, and an interface for interfacing the reconverted POTS format signal to a public switched telephone network.

In accordance with one aspect of the invention, the converter converts the POTS format signals to asynchronous transfer mode signal format. In accordance with another aspect of the invention, the converter converts the POTS format signals to internet protocol before insertion into the high speed data segment.

Preferably, the telecommunication system includes a central office converter for converting voice data in the logical channel associated with the subscriber and received at the central office to asynchronous transfer mode format signals, and another interface for coupling the asynchronous transfer mode signals carrying POTS signal information directed to the subscriber telephone into the logical channel associated with the subscriber telephone.

Preferably, the telecommunication system includes another subscriber telephone linked through a passband analog voice channel of the asymmetric digital subscriber line service and the twisted pair to a POTS lines terminating port, and said POTS line terminating port has an associated telephone directory number that is different from a directory telephone number of the one subscriber telephone linked via the high speed data segment of the asymmetric digital subscriber line service.

Advantageously, the telecommunication system of the present invention inserts the voice data on a dynamic basis. When there is no use of the additional telephone linked through the multi-channel voice interface, then there is no use of the high speed, data segment of the ADSL signal and the entire segment is useable for other data transfer.

In accordance with telecommunicating methods used in a telecommunication system having a central office switch connected with a subscriber telephone through an asymmetric digital subscriber line service via a single twisted pair loop, communication is established with another telephone by converting POTS format signals from the subscriber telephone to a stream of voice data in a logical channel associated with the subscriber telephone, inserting the stream of voice data in the logical channel into a high speed data segment of the asymmetric digital subscriber line service prior to transmission from the subscriber via the twisted pair loop to the central office switch, removing at the central office the voice data inserted in the logical channel from the high speed data segment of the asymmetric digital subscriber line service signal received at the central office switch on the twisted pair loop, reconverting the voice data after being removed from the logical channel to a reconverted POTS format signal, and interfacing the reconverted POTS format signal to a public switched telephone network.

Generally, the invention provides in a telecommunication system having a central office switch connected with a subscriber telephone through an asymmetric digital subscriber line service via a single twisted pair loop, a multi-channel digital subscriber line interface with means for converting POTS format signals from the subscriber telephone to a stream of voice data in a logical channel associated with the subscriber telephone, means for inserting the stream of voice data in the logical channel into a high speed data segment of the asymmetric digital subscriber line service prior to transmission from the subscriber via the twisted pair to the central office switch, means for removing the voice data in the logical channel from the high speed data segment of the asymmetric digital subscriber line service signal received at the central office switch, means for reconverting the voice data of the removed logical channel to a reconverted POTS format signal, and means for interfacing the reconverted POTS format signal to a public switched telephone network.

### Brief Description Of The Drawings

The forgoing advantageous features of the invention will be explained in greater detail and others will be made apparent from the detailed description of what is the presently believed best mode of practicing the invention which is given with reference to the several figures of the drawing, in which:
Fig. 1 is a simplified functional block diagram of one embodiment of the telecommunication system of the present invention; and
Fig.2 is a detailed functional block diagram of the subscriber telephone with multi-channel digital subscriber line system interface functional block and the local central office with multi-channel digital subscriber line interface block shown as single functional blocks in Fig. 1.

### Detailed Description

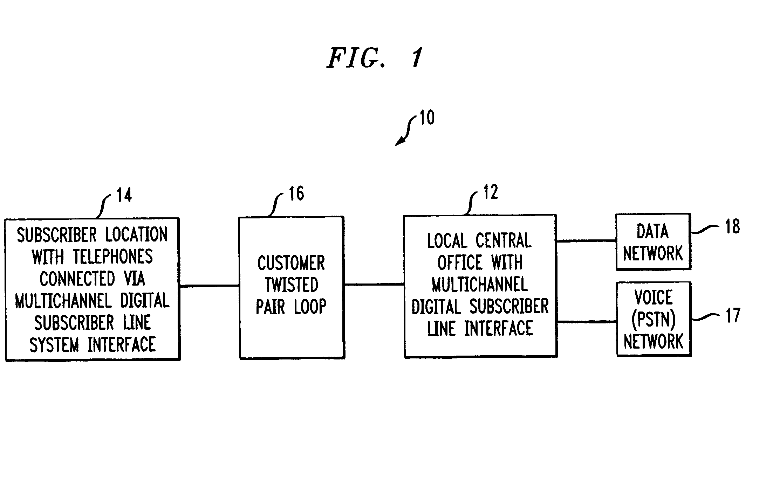

Referring now to Fig. 1, preferably the telecommunication system 10 of the present invention has a local central office with a multi-channel digital subscriber line interface 12 connected with a plurality of telephones of at a subscriber location with telephones connected via a multi-channel digital subscriber line system interface 14. The connection is via a single customer twisted pair, or loop, 16 connected with the subscriber telephone 14.

The central office 12 is connected to a data network 18 for transmission and receipt of data received from one or more of a plurality of high speed, logical channels of the asymmetrical digital subscriber line service used for data communication. The central office switch 12 is connected through the data network 18 to the world wide web, or computer internet.

The local central office 12 is also interfaced with a voice network, the PSTN, or public switched telephone network, 17 for regular telephonic voice communications.

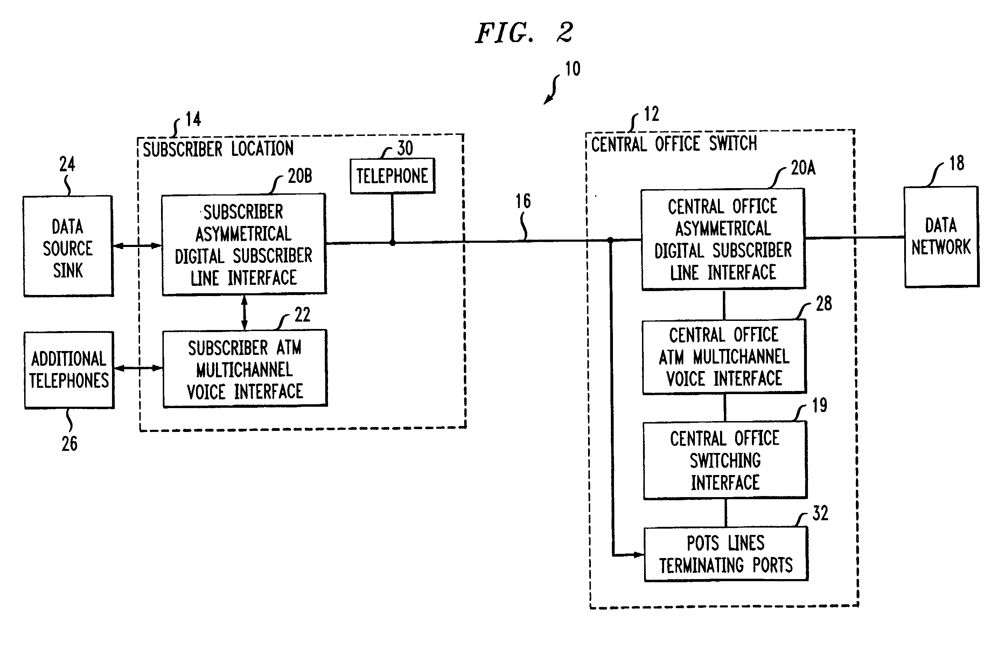

Referring now to Fig.2, the central office switch 12 has a central office subscriber asymmetrical digital subscriber line, or ADSL, interface 20A, and the subscriber location 14 has a subscriber asymmetrical digital subscriber line, or ADSL, interface 20B. The only connection between them is through a single twisted pair, or loop, or POTS line 16. Both of the interfaces are conventional and details of their construction and operation are given in "ADSL and DSL Technologies" by Walter Goralski, McGraw-Hill, ISBN 0-07-024679-3, the disclosure of which is hereby incorporated by reference. Briefly, as described at page 39 of "Newton's Telecom Dictionary", 1998 edition published by Flatiron Publishing, a division of Miller Freeman, Inc., New York, ADSL has been standardized by ANSI as T1.413. The ADSL service includes a plurality of broadband logical channels for high speed, data transmission along with a relatively lower bandwidth passband analog voice channel for also providing POTS service 16 between the central office and the subscriber. The data channels are logical channels with each packet of information carrying its own individual source and recipient address information needed for distribution through the data network 18.

At the subscriber location 14, data from a data source/sink 24, such as a personal computer, is interfaced to the customer twisted pair loop, or POTS line, 16 through the subscriber asymmetrical digital subscriber line interface 20B. The subscriber ADSL interface 20B inserts data from the data source 24 into the high speed, data channels. Likewise, data received on the high speed, data channels over the twisted pair are interfaced to the data sink 24.

The central office asymmetrical digital subscriber line interface 20A interfaces data on the high speed logical data channels between the customer twisted pair loop 16 and the data network 18. The data network, in turn, is connected through servers to the world wide web, or computer internet, and to other data sources and sinks (not shown). Likewise, data signals received by the ADSL interface 20A from the data network are interfaced to the twisted pair 16 on the high speed data channel of the ADSL service.

Voice signals in POTS format are interfaced with the PSTN through means of a conventional central office switching interface 19 and thus to another central office switch for regular telephonic voice communications.

The customer telephone 30 is connected directly to the twisted pair 16 through suitable filters (not shown) at the customer location, and one of the POTS line terminating ports 32 is connected directly to the twisted pair 16 at the central office switch 12 through another filter (not shown). Each of the POTS lines terminating ports has a different associated directory number and is connectable through the central office switching interface 19 with the PSTN through a voice communication section of the network. Incoming calls from the PSTN to the telephone 30 are passed by the central office switching interface to the POTS line terminating port associated with the telephone 30 and then onto the twisted pair 16 and the telephone 30.

In this way the ADSL technology allows both broadband high speed data services, such as digital video, internet access, local area network access, video on demand and cable TV, and a single POTS line to share a single twisted pair 16. Disadvantageously, without the present invention only one POTS connection, or only one directory number, per twisted pair is possible because the broadband services and the POTS service use different frequency bands and only one relatively slow speed passband analog voice channel is available for POTS service.

In accordance with the present invention, this single POTS line service per twisted pair limitation is overcome by interfacing additional telephones 26 at the subscriber location 14 via the high speed channels normally reserved for only data communications between computers, facsimile machines and other like data sources and sinks. This individualized interfacing is achieved by converting the voice and communication protocol signals from the additional telephones 26 to a plurality of high speed, voice data streams compatible with asynchronous transfer mode, or ATM, signaling format.

In ATM signaling format, each packet of data carries with it an ATM address and information identifying the associated logical channel. These ATM data streams containing the voice data from the additional telephones are injected into and thereby utilize the plurality of high speed, ADSL data channels by the subscriber ATM multi-channel voice interface 22 on an asynchronous basis. They are passed over the twisted pair 16 and then "peeled off" based on the identifying information carried by the data packets. The data packets that contain the voice and other protocol data of a regular POTS line are then reconverted to POTS format by the central office ATM multi-channel voice interface. The reconverted POTS format signals are then passed to the central office switching interface to 19 to the PSTN.

The POTS format signals associated with the additional telephones 26 are indistinguishable from the POTS format signals received from the one of the POTS lines terminating ports associated with telephone 30. Each of the additional telephones 26 has its own directory number and appears to the PSTN to be just regular POTS telephone with its own twisted pair and its own POTS line terminating port.

Incoming calls from the PSTN for one of the additional telephones 26 are passed to the central office ATM multi-channel voice interface 28 where incoming POTS format signals are converted to ATM format and asynchronously injected into the high speed, data channels of the ADSL format signals from the central office ADSL interface 20A. The subscriber ADSL interface 20B passes the data packets associated with the additional telephones to the subscriber ATM multi-channel voice interface 22. The multi-channel voice interface then converts the data packets to POTS format signals and passes them to the associated one of the additional telephones.

The injection of the voice data from the additional telephones is achieved on a dynamic basis, that is, on an "as needed" basis. Advantageously, when the additional telephones are not being used for voice communications then none of the data bandwidth of ADSL data channels is utilized. Likewise, when there are pauses in voice communications that are ongoing, there is little or no use of the data channels for voice communication. Accordingly, use of the invention, while increasing the number of individual telephone lines capable of being serviced by a single twisted pair via ADSL service, does not result in substantial degradation in the quality of the data communication services for the internet, facsimile and other data transmission.

Preferably, as noted above, the use of the broadband channels of the ADSL interfaces 20A and 20B is achieved through use of a subscriber asynchronous transfer mode, or ATM, multi-channel voice interface 22 and a central office ATM multi-channel voice interface 28. The ATM multi-channel voice interface interfaces the additional telephones 26 with the subscriber asymmetrical digital subscriber line interface 20B to inject voice signals into one of the plurality of broadband channels prior to transmission on the customer twisted pair 16. The central office ATM multi-channel voice interface 28 recovers the voice signals on the line 16 from the additional telephones 26 interfaces the recovered voice signals with the associated ones of the POTS line terminating ports.

More specifically, the subscriber ATM multi-channel voice interface 22 at the subscriber 14 converts the telephonic voice traffic from the additional telephones 26 at the subscriber location 14 to a stream of voice data in accordance with the asynchronous transfer mode protocol as described at page 67 of the aforementioned Newton's Telecom Dictionary.

As noted generally above, the subscriber asymmetrical digital service line interface 20B interfaces the voice data from the subscriber ATM multi-channel voice interface 22 on the different ones of a plurality broadband channels to the twisted pair 16 for transmission to the local central office 12 to which the subscriber location is connected.

A data source 24, such as a computer, is also attached to the asymmetrical digital subscriber line interface 20B, for transmission of data on other channels while the telephone 30 is connected via the passband analog voice channel.

The central office asymmetrical digital subscriber line interface 20A at the central office switch 12 decodes the voice signals from the telephone 30 on the passband analog voice channel and passes them to one of the POTS line terminating ports 32 associated with the telephone 30. Data from the data source 24 of the subscriber 14 and sent over the POTS line 16 is accepted by the central office ADSL interface 20A and forwarded out to the data network 18.

However, as noted generally, in accordance with the invention, when voice data from an additional telephone 26 that has been inserted into one of the regular data channels is received, it is sent to the central office ATM multi-channel voice interface 28. The multi-channel interface converts the voice carrying data signal to a POTS-form signal and applies it to the central office switch that appears the same to and data sent from the subscriber 14. The voice traffic is then sent to an ATM multi-channel voice interface 28. The central office ATM multi-channel voice interface 28 extracts and demultiplexes the voice data signals from the different broadband channels associated with the additional telephones 26 and couples the recovered voice signals from the additional telephones 26. The logical voice channels are extracted by the central office ATM multi-channel interface 28 and delivered to the central office switch interface 19. Data, other than voice data associated with the additional telephones, on the other broadband channels is passed by the central office ADSL interface 20A to the data network 18.

In the reverse direction, voice signals coming into the POTS line terminating ports associated with the additional telephones 26 are converted to a voice data stream by the central office ATM multi-channel voice interface 28 and inserted into ones of the broadband channels associated with the additional telephones and transmitted by the central office ADSL interface 20A on the twisted pair 16 to the subscriber location 14 extracts the voice data from the ones of the broadband channels associated with the additional telephones 26. The subscriber ATM multi-channel voice interface 22 then demultiplexes the voice data stream into audio signals that are applied to the associated additional telephones 26.

Alternatively, the POTS format signals are converted to internet protocol, or IP, signals that are sent through the data network and through the internet in IP format before being reconverted to POTS format and applied to a remote telephone and signals from the internet in IP format are converted to POTS format before being selectively applied to the additional telephones 26.

## Claims

1. In a telecommunication system having a central office switch connected with a subscriber telephone through an asymmetric digital subscriber line service via a single twisted pair loop, the improvement being a multi-channel digital subscriber line interface, comprising:
a POTS signal converter for converting POTS format signals from the subscriber telephone to a stream of voice data in a logical channel associated with the subscriber telephone;
a data merger for inserting the stream of voice data in the logical channel into a high speed data segment of the asymmetric digital subscriber line service prior to transmission from the subscriber via the twisted pair to the central office switch;
a high speed data splitter for removing the voice data in the logical channel from the high speed data segment of the asymmetric digital subscriber line service signal received at the central office switch;
a POTS signal reconverter for reconverting the voice data of the removed logical channel to a reconverted POTS format signal; and
an interface for interfacing the reconverted POTS format signal to a public switched telephone network.

2. The telecommunication system of claim 1 in which the converter converts the POTS format signals to asynchronous transfer mode signal format.

3. The telecommunication system of claim 1 including
a central office converter for converting voice data in the logical channel associated with the subscriber and received at the central office to asynchronous transfer mode format signals, and
another interface for coupling the asynchronous transfer mode signals carrying POTS signal information directed to the subscriber telephone into the logical channel associated with the subscriber telephone.

4. The telecommunication system of claim 1 including
another subscriber telephone linked through a passband analog voice channel of the asymmetric digital subscriber line service and the twisted pair to a POTS lines terminating port, and in which
said POTS line terminating port has an associated telephone directory number that is different from a directory telephone number of the one subscriber telephone linked via the high speed data segment of the asymmetric digital subscriber line service.

5. The telecommunication system of claim 1 in which the inserter inserts the voice data on a dynamic basis.

6. The telecommunication system of claim 1 in which the converter converts the voice signals to internet protocol signals prior to insertion of the voice signals into the high speed data segment.

7. The telecommunication system of claim 6 in which the converter also converts POTS directory number signals to internet protocol signals prior to insertion into the other POTS signals

8. The telecommunication system of claim 1 including
a central office converter for converting voice data in the logical channel associated with the subscriber and received at the central office to internet protocol format signals, and
another interface for coupling the internet protocol format signals carrying POTS signal information directed to the subscriber telephone into the logical channel associated with the subscriber telephone.

9. In a telecommunication system having a central office switch connected with a subscriber telephone through an asymmetric digital subscriber line service via a single twisted pair loop, the improvement being a method of telecommunicating, comprising the steps of:
converting POTS fbrmat signals from the subscriber telephone to a stream of voice data in a logical channel associated with the subscriber telephone;
inserting the stream of voice data in the logical channel into a high speed data segment of the asymmetric digital subscriber line prior to transmission from the subscriber via the twisted pair loop to the central office switch;
removing at the central office the voice data inserted in the logical channel from the high speed data segment of the asymmetric digital subscriber line service signal received at the central office switch on the twisted pair loop;
reconverting the voice data after being removed from the logical channel to a reconverted POTS format signal; and
interfacing the reconverted POTS format signal to a public switched telephone network.

10. The telecommunication method of claim 9 in which the step of converting includes the step of converting the POTS format signals to asynchronous transfer mode signal format.

11. The telecommunication method of claim 9 including the steps of
converting at the central office switch incoming POTS format signals directed to the subscriber telephone to a stream of voice data in the logical channel associated with the subscriber telephone, and
inserting the stream of voice data in the logical channel into the high speed data segment of the asymmetric subscriber line service prior to transmission from the central office switch via the twisted pair to the subscriber telephone.

12. The telecommunication method of claim 11 including the steps of
splitting off the voice data in the logical channel from the high speed data segment of the asymmetric digital subscriber line service received at a location of the subscriber telephone,
reconverted the voice data of the logical channel removed during the step of splitting to a POTS format signal, and
interfacing the reconverted POTS format signal to the subscriber telephone.

13. The telecommunication method of claim 9 including the steps of
linking another subscriber telephone to the central office switch through a passband analog voice channel of the asymmetric digital subscriber line service and the twisted pair to a POTS lines terminating port of the central office switch, and in which
associating a directory number with said POTS line terminating port of the other subscriber telephone,
associating another telephone directory number with the one subscriber telephone that is linked via the high speed data segment of the asymmetric digital subscriber line service that is different than the one number of the POTS line terminating port of the other subscriber telephone.

14. The telecommunication method of claim 9 in which the step of inserting the voice data is performed on a dynamic basis.

15. The telecommunication method of claim 9 in which the step of converting is performed by converting the voice signals to internet protocol signals prior to insertion of the voice signals into the high speed data segment.

16. The telecommunication method of claim 15 in which the converter also converts POTS directory number signals to internet protocol signals prior to insertion.

17. The telecommunication method of claim 9 including the steps of
at the central office switch converting voice data in the logical channel associated with the subscriber and received at the central office to internet protocol format signals, and
coupling the internet protocol format signals carrying POTS signal information directed to the subscriber telephone into the logical channel associated with the subscriber telephone.

18. In a telecommunication system having a central office switch connected with a subscriber telephone through an asymmetric digital subscriber line service via a single twisted pair loop, the improvement being a multi-channel digital subscriber line interface, comprising:
means for converting POTS format signals from the subscriber telephone to a stream of voice data in a logical channel associated with the subscriber telephone;
means for inserting the stream of voice data in the logical channel into a high speed data segment of the asymmetric digital subscriber line service prior to transmission from the subscriber via the twisted pair to the central office switch;
means for removing the voice data in the logical channel from the high speed data segment of the asymmetric digital subscriber line service signal received at the central office switch;
means for reconverting the voice data of the removed logical channel to a reconverted POTS format signal; and
means for interfacing the reconverted POTS format signal to a public switched telephone network.

19. The telecommunication system of claim 18 in which the converting means converts the POTS format signals to asynchronous transfer mode signal format.

20. The telecommunication system of claim 18 in which the converting means converts the POTS format signals to internet protocol format signals.
